(19) Europäisches Patentamt / European Patent Office / Office européen des brevets

(11) **EP 4 647 858 A1**

(12) **EUROPEAN PATENT APPLICATION**
published in accordance with Art. 153(4) EPC

(43) Date of publication:
**12.11.2025 Bulletin 2025/46**

(21) Application number: **23919414.5**

(22) Date of filing: **08.11.2023**

(51) International Patent Classification (IPC):
**G05B 19/418** $^{(2006.01)}$

(86) International application number:
**PCT/CN2023/130325**

(87) International publication number:
**WO 2024/159850 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **01.02.2023 CN 202310050259**

(71) Applicants:
- **CISDI Engineering Co., Ltd**
  **Chongqing 400013 (CN)**
- **CISDI Shanghai Engineering Co., Ltd.**
  **Shanghai 200940 (CN)**

(72) Inventors:
- **LI, Muming**
  **Chongqing 400013 (CN)**
- **ZOU, Zhongping**
  **Chongqing 400013 (CN)**
- **XIAO, Xuewen**
  **Chongqing 400013 (CN)**
- **WANG, Gang**
  **Chongqing 400013 (CN)**
- **ZHAO, Yunjian**
  **Chongqing 400013 (CN)**
- **NIU, Qun**
  **Chongqing 400013 (CN)**
- **ZHENG, Jun**
  **Chongqing 400013 (CN)**
- **XIONG, Shigen**
  **Chongqing 400013 (CN)**
- **HE, Maocheng**
  **Chongqing 400013 (CN)**
- **HOU, Shifeng**
  **Chongqing 400013 (CN)**
- **XU, Jun**
  **Chongqing 400013 (CN)**

(74) Representative: **Chung, Hoi Kan**
**Mandarin IP Limited**
**7 Cherry Trees**
**Great Shelford**
**Cambridge CB22 5XA (GB)**

(54) **PRODUCTION CONTROL METHOD AND SYSTEM FOR STABLE CARBON CYCLE BLAST FURNACE, AND ELECTRONIC DEVICE AND STORAGE MEDIUM**

(57) A production control method, system, electronic device, and storage medium for a stable carbon cycle blast furnace. The method comprises acquiring the types of circulating gas generated during blast furnace production, the real-time flow rate of the circulating gas, the real-time content of each component in the circulating gas, and the real-time average specific heat capacity of the circulating gas. An adjustment strategy is determined based on the real-time flow rate, the component contents, and the types of the circulating gas. The production conditions of the blast furnace are then adjusted according to the adjustment strategy, and production is carried out under the adjusted production conditions. Under the adjusted production conditions, real-time output data, real-time production indicators, the displacement ratio of the circulating gas, heat data, and the quantity of gas generated by fuel combustion in front of the tuyere are acquired. The operating state is determined based on the heat data, the quantity of gas generated by fuel combustion in front of the tuyere, the displacement ratio, and the real-time production indicators. If the operating state is determined to be unstable, the adjustment strategy is reapplied, and the operating state is redetermined, wherein such operations are repeated until the operating state becomes stable.

Acquire the type of recycled gas in blast furnace production, the real-time volume of the recycled gas, the real-time component content of the recycled gas, and the real-time average specific heat capacity of the recycled gas ⟍ S110

Determine an adjustment strategy based on the real-time volume of the recycled gas, the real-time component content of the recycled gas, and the type of the recycled gas ⟍ S120

Adjust the blast furnace production conditions according to the adjustment strategy, and perform production based on the adjusted blast furnace production conditions ⟍ S130

Acquire the real-time output, real-time production indicators, gas replacement ratio of the recycled gas, thermal data, and the gas volume generated by fuel combustion in front of the tuyere under the adjusted blast furnace production conditions ⟍ S140

Determine the operating state based on the thermal data, the gas volume generated by fuel combustion in front of the tuyere, the replacement ratio, and the real-time production indicators ⟍ S150

If the operating state is determined to be unstable, the adjustment is repeatedly performed according to the adjustment strategy, and the operating state is repeatedly determined until the operating state becomes stable ⟍ S160

FIG. 1

## Description

### FIELD OF THE INVENTION

This application relates to the technical field of blast furnace production, and in particular, to a production control method, system, electronic device, and storage medium for a stable carbon cycle blast furnace.

### BACKGROUND

A blast furnace is a high-temperature, countercurrent, and sealed reaction vessel.

During blast furnace production, iron ore, coke, and fluxing agents for slag formation (typically limestone) are charged from the top of the furnace, and preheated air is blown in through tuyeres arranged around the lower part of the furnace. At high temperatures, carbon contained in fuels (such as coke, pulverized coal, heavy oil, or natural gas) reacts with oxygen in the air entering the blast furnace to generate carbon monoxide and hydrogen. These gases rise within the furnace and react with the iron ore, thereby reducing it to produce molten iron and by-products including blast furnace slag and blast furnace gas. The molten iron is discharged through the tap hole, while unreduced impurities in the iron ore combine with fluxes such as limestone to form slag, which is also discharged from the tap hole. The generated gas is discharged from the furnace top, and after dedusting, is used as fuel for hot blast stoves, heating furnaces, coke ovens, boilers, and the like.

Stable and smooth operation of the blast furnace is a fundamental condition for efficient and low-consumption operation. In traditional blast furnace processes, stable furnace conditions are achieved by maintaining consistent quality of raw materials and fuels, as well as a stable blast regime. The fluctuations in factors such as raw material quality and air supply are relatively small and can be well controlled. However, in a carbon cycle blast furnace, gas injection is introduced as a new and unstable factor, which increases the risk of furnace condition fluctuations compared with traditional blast furnaces. Moreover, compared with other fluctuation factors such as raw material condition variation, the volatility of injected gas is more significant. As it is a secondary energy source, both the frequency and range of fluctuations in its composition and generation rate are larger, making it more difficult to control. Injecting highly volatile gas into the blast furnace results in unstable operating conditions in the carbon cycle blast furnace, which makes it difficult to achieve effective substitution of solid fuel by gas, and ultimately leads to an unsatisfactory decarbonization effect in the smelting process of the carbon cycle blast furnace.

### BRIEF DESCRIPTION

In view of the deficiencies of the prior art described above, the present application provides a production control method, system, electronic device, and storage medium for a stable carbon cycle blast furnace.

In the first aspect, the present application provides a production control method for a stable carbon cycle blast furnace, the production control method comprising:

acquiring the type of circulating gas in blast furnace production, the real-time flow rate of the circulating gas, the real-time content of each component in the circulating gas, and the real-time average specific heat capacity of the circulating gas;

determining an adjustment strategy based on the real-time flow rate of the circulating gas, the real-time content of each component in the circulating gas, and the type of the circulating gas;

adjusting the blast furnace production conditions according to the adjustment strategy, and performing production based on the adjusted blast furnace production conditions;

acquiring real-time production output, real-time production indicators, the displacement ratio of the circulating gas, heat data, and the volume of gas generated by fuel combustion in front of the tuyere, under the adjusted blast furnace production conditions;

determining an operating state based on the heat data, the gas volume generated by fuel combustion in front of the tuyere, the displacement ratio, and the real-time production indicators, the operating state comprising a stable state and an unstable state;

and, if the operating state is unstable, repeatedly adjusting the production conditions according to the adjustment strategy and re-determining the operating state until the operating state becomes stable.

In an exemplary embodiment of the present application, determining the adjustment strategy comprises:

determining the fluctuation amount of the circulating gas based on the real-time flow rates of the circulating gas at adjacent time points;

determining the fluctuation amount of heat value based on the real-time content of each component in the circulating gas.

The adjustment strategy is determined based on the type of circulating gas, the fluctuation amount of the circulating gas, and the fluctuation amount of heat value.

In an exemplary embodiment of the present application, determining the fluctuation amount of heat value comprises:

determining the real-time heat value of the circulating gas based on the real-time content of each component in the circulating gas;

and determining the fluctuation amount of heat value based on the real-time heat values of the circulating gas at adjacent time points.

In an exemplary embodiment of the present application, the types of circulating gas include coke oven gas, converter gas, and blast furnace gas, and determining the adjustment strategy comprises:

if the fluctuation amount of the circulating gas is less than a preset threshold for gas fluctuation and the circulating gas is coke oven gas, then a first preset injection amount is used to increase the pulverized coal injection amount, a first preset coke ratio is used to increase the coke ratio, and a first preset oxygen-enriched blast amount is used to increase the oxygen-enriched blast amount, which is determined as the adjustment mode for the blast furnace production conditions;

if the fluctuation amount of the circulating gas is less than the preset threshold and the circulating gas is converter gas, then a second preset injection amount is used to increase the pulverized coal injection amount, a second preset coke ratio is used to increase the coke ratio, and a second preset oxygen-enriched blast amount is used to increase the oxygen-enriched blast amount, which is determined as the adjustment mode for the blast furnace production conditions;

if the fluctuation amount of the circulating gas is less than the preset threshold and the circulating gas is blast furnace gas, then a third preset injection amount is used to increase the pulverized coal injection amount, a third preset coke ratio is used to increase the coke ratio, and a third preset oxygen-enriched blast amount is used to increase the oxygen-enriched blast amount, which is determined as the adjustment mode for the blast furnace production conditions;

if the fluctuation amount of heat value is greater than a preset heat value fluctuation threshold, then a fourth preset injection amount is used to reduce the pulverized coal injection amount, and a fourth preset coke ratio is used to reduce the coke ratio, which is determined as the adjustment mode for the blast furnace production conditions.

In an exemplary embodiment of the present application, determining the adjustment strategy further comprises:

if the fluctuation amount of the circulating gas is greater than a preset threshold for gas fluctuation and the circulating gas is coke oven gas, then a fifth preset injection amount is used to reduce the pulverized coal injection amount, a fifth preset coke ratio is used to reduce the coke ratio, and a fourth preset oxygen-enriched blast amount is used to reduce the oxygen-enriched blast amount, which is determined as the adjustment mode for the blast furnace production conditions;

if the fluctuation amount of the circulating gas is greater than the preset threshold and the circulating gas is converter gas, then a sixth preset injection amount is used to reduce the pulverized coal injection amount, a sixth preset coke ratio is used to reduce the coke ratio, and a fifth preset oxygen-enriched blast amount is used to reduce the oxygen-enriched blast amount, which is determined as the adjustment mode for the blast furnace production conditions;

if the fluctuation amount of the circulating gas is greater than the preset threshold and the circulating gas is blast furnace gas, then a seventh preset injection amount is used to reduce the pulverized coal injection amount, a seventh preset coke ratio is used to reduce the coke ratio, and a sixth preset oxygen-enriched blast amount is used to reduce the oxygen-enriched blast amount, which is determined as the adjustment mode for the blast furnace production conditions;

if the fluctuation amount of heat value is less than a preset heat value fluctuation threshold, then an eighth preset injection amount is used to increase the pulverized coal injection amount, and an eighth preset coke ratio is used to increase the coke ratio, which is determined as the adjustment mode for the blast furnace production conditions.

In an exemplary embodiment of the present application, the heat data includes the heat released from coke combustion in front of the tuyere, the heat released from pulverized coal combustion in front of the tuyere, the physical heat of coke entering the combustion zone, the heat brought in by blast air, the heat consumed by the decomposition of moisture, and the heat consumed by the decomposition of pulverized coal, and determining the operating state comprises:

determining the theoretical combustion temperature based on: the heat released from coke combustion in front of the tuyere, the heat released from pulverized coal combustion in front of the tuyere, the heat brought in by the gas, the heat released by the decomposition of hydrocarbon compounds in the gas into carbon monoxide and hydrogen, the physical heat of coke entering the combustion zone, the heat brought in by blast air, the heat consumed by the decomposition of moisture, the heat consumed by the decomposition of pulverized coal, the volume of gas generated by fuel combustion in front of the tuyere, and the real-time average specific heat capacity of the circulating gas;

and determining the operating state based on the theoretical combustion temperature, the displacement ratio, and the real-time production indicators.

In an exemplary embodiment of the present application, determining the operating state comprises:

if the theoretical combustion temperature is greater than or equal to a preset lower temperature threshold and less than or equal to a preset upper temperature threshold, the displacement ratio is greater than or equal to a preset displacement ratio threshold, and the real-time production indicators are greater than or equal to a preset production indicator threshold, the operating state is determined to be stable;

if the theoretical combustion temperature is less than the preset lower temperature threshold, the operating state is determined to be unstable;

if the theoretical combustion temperature is greater than the preset upper temperature threshold, the operating state is determined to be unstable;

if the displacement ratio is less than the preset displacement ratio threshold, the operating state is determined to be unstable;

if the real-time production indicators are less than the preset production indicator threshold, the operating state is determined to be unstable.

In a second aspect, the present application provides a production control system for a stable carbon cycle blast furnace, the production control system comprising:

a first acquisition module configured to acquire the type of circulating gas in blast furnace production, the real-time flow rate of the circulating gas, the real-time content of each component in the circulating gas, and the real-time average specific heat capacity of the circulating gas;

a first determination module configured to determine an adjustment strategy based on the real-time flow rate of the circulating gas, the real-time content of each component in the circulating gas, and the type of the circulating gas;

a processing module configured to adjust the blast furnace production conditions according to the adjustment strategy and to perform production based on the adjusted blast furnace production conditions;

a second acquisition module configured to acquire real-time production output, real-time production indicators, the displacement ratio of the circulating gas, heat data, and the volume of gas generated by fuel combustion in front of the tuyere under the adjusted blast furnace production conditions;

a second determination module configured to determine an operating state based on the heat data, the volume of gas generated by fuel combustion in front of the tuyere, the displacement ratio, and the real-time production indicators, the operating state comprising a stable state and an unstable state;

a third determination module configured, if the operating state is unstable, to repeatedly adjust the production conditions according to the adjustment strategy and repeatedly determine the operating state until the operating state becomes stable.

In a third aspect, the present application further provides an electronic device, which comprises:

one or more processors;

a storage device configured to store one or more programs, wherein when the one or more programs are executed by the one or more processors, the electronic device is enabled to implement the production control method for stable carbon cycle blast furnace as described above.

In a fourth aspect, the present application further provides a computer-readable storage medium having stored thereon a computer program, wherein when the computer program is executed by a processor of a computer, the computer is enabled to execute the production control method for stable carbon cycle blast furnace as described above.

The production control method, system, electronic device, and storage medium for stable carbon cycle blast furnace provided by the present application offer the following beneficial effects:

By acquiring the type of circulating gas in blast furnace production, the real-time flow rate of the circulating gas, the real-time content of each component in the circulating gas, and the real-time average specific heat capacity of the circulating gas, an adjustment strategy is determined based on the real-time flow rate, real-time component content, and the type of the circulating gas; the blast furnace production conditions are adjusted according to the adjustment strategy, and production is carried out based on the adjusted conditions; real-time production output, real-time production indicators, the displacement ratio of circulating gas, heat data, and the gas volume formed by fuel combustion in front of the tuyere are acquired under the adjusted production conditions; based on the heat data, the gas volume formed by tuyere-side fuel combustion, the displacement ratio, and the real-time production indicators, the operating state is determined; if the operating state is unstable, the adjustment strategy is repeatedly applied and the operating state is repeatedly determined until a stable state is achieved. That is, during the blast furnace production process, the present application enables coordinated adjustment of the process conditions for the carbon cycle blast furnace, so as to achieve stable operation of the carbon cycle blast furnace, improve the substitution ratio of circulating gas to solid fuel, and reduce carbon emissions during blast furnace smelting.

It should be understood that the foregoing general description and the following detailed description are exemplary and explanatory only and are not intended to limit the present application.

## BRIEF DESCRIPTION OF THE DRAWINGS:

The accompanying drawings, which are incorporated in and constitute a part of the specification, illustrate exemplary embodiments of the present application and, together with the description, serve to explain the principles of the present application. It is apparent that the drawings described below represent only some embodiments of the present application. Other drawings may also be conceived by those of ordinary skill in the art without inventive efforts based on the disclosed drawings.

FIG. 1 is a flowchart illustrating a production control method for a stable carbon cycle blast furnace according to an exemplary embodiment of the present application;

FIG. 2 is a flowchart illustrating a method for determining an adjustment strategy in an exemplary embodiment shown in FIG. 1;

FIG. 3 is a flowchart illustrating a method for determining a calorific value fluctuation in an exemplary embodiment shown in FIG. 2;

FIG. 4 is a flowchart illustrating another exemplary process for determining an adjustment strategy in the embodiment shown in FIG. 2;

FIG. 5 is a flowchart illustrating a further exemplary process for determining an adjustment strategy in the embodiment shown in FIG. 2;

FIG. 6 is a flowchart illustrating a method for determining an operating state in another exemplary embodiment shown in FIG. 1;

FIG. 7 is a flowchart illustrating a further exemplary process for determining an operating state in the embodiment shown in FIG. 6;

FIG. 8 is a flowchart illustrating a production control method for a stable carbon cycle blast furnace in a specific embodiment;

FIG. 9 is a block diagram of a production control system for a stable carbon cycle blast furnace according to an exemplary embodiment of the present application;

FIG. 10 is a schematic structural diagram of a computer system adapted to implement the electronic device described in the embodiments of the present application.

**DETAIL DESCRIPTION:**

The following description of embodiments of the present invention is provided with reference to the accompanying drawings and preferred embodiments. Those skilled in the art can readily appreciate other advantages and benefits of the present invention based on the disclosures herein. The present invention may also be implemented or applied in various alternative embodiments. The details disclosed in this specification may be modified or altered in different ways and applications without departing from the spirit of the present invention. It should be understood that the preferred embodiments are provided solely for illustrative purposes and are not intended to limit the scope of protection of the present invention.

It should be noted that the diagrams provided in the following embodiments are merely schematic illustrations intended to convey the basic concepts of the present invention. Accordingly, the figures show only components relevant to the present invention and are not drawn to the actual quantity, shape, or scale used in practice. The actual configurations, numbers, and proportions of components may vary, and the layout of components may be more complex in practical implementations.

In the following description, numerous details are set forth in order to provide a thorough understanding of the embodiments of the present invention. However, it will be apparent to those skilled in the art that the present invention may be practiced without these specific details. In other instances, well-known structures and devices are shown in block diagram form rather than in detail, so as not to obscure the embodiments of the present invention.

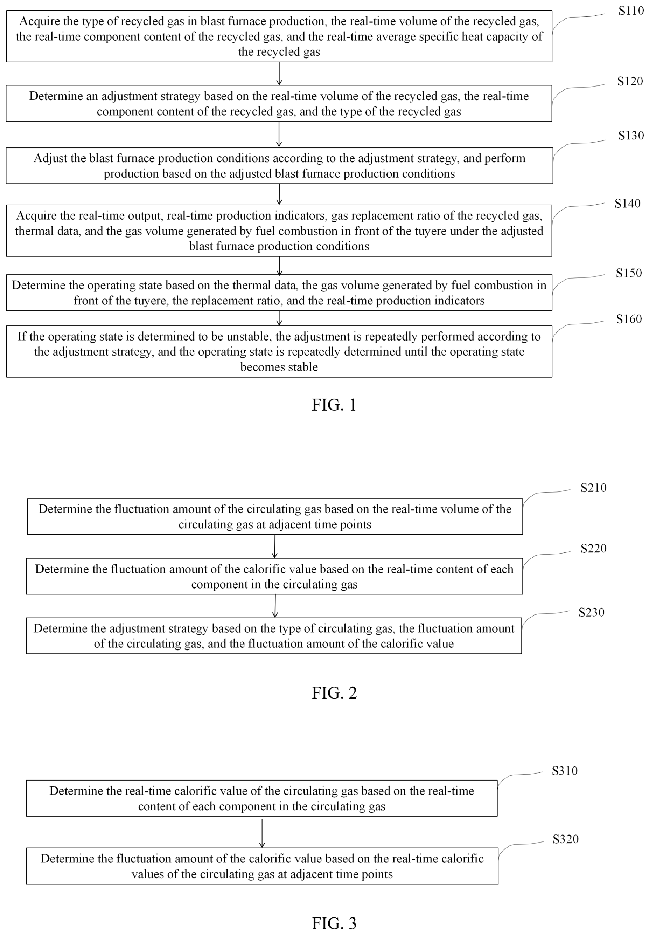

Refer to FIG. 1, which is a flowchart illustrating a production control method for a stable carbon cycle blast furnace according to an exemplary embodiment of the present application.

As shown in FIG. 1, in an exemplary embodiment of the present application, the production control method for the stable carbon cycle blast furnace at least includes steps S110 to S160, detailed as follows:

Step S110: obtaining the type of recycled gas used in blast furnace production, the real-time amount of recycled gas, the real-time content of each component in the recycled gas, and the real-time average specific heat capacity of the recycled gas;

It should be noted that the recycled gas includes coke oven gas, converter gas, and blast furnace gas;

The real-time average specific heat capacity of the recycled gas is obtained by summing the products of the real-time content of each component in the recycled gas and the specific heat capacity of the corresponding component.

Step S120: determining an adjustment strategy based on the real-time amount of recycled gas, the real-time content of each component in the recycled gas, and the type of recycled gas;

Step S130: adjusting the blast furnace production conditions according to the adjustment strategy, and performing production according to the adjusted blast furnace production conditions;

Step S140: obtaining the real-time output, real-time production indicators, the substitution ratio of recycled gas, heat data, and the amount of gas generated by fuel combustion before the tuyeres according to the adjusted blast furnace production conditions;

Step S150: determining the operation state based on the heat data, the amount of gas generated by fuel combustion before the tuyeres, the substitution ratio, and the real-time production indicators;

It should be noted that the real-time production indicators include molten iron output, blast furnace utilization rate (i.e., effective volume utilization rate of the blast furnace), energy consumption, and comprehensive fuel ratio;

In the present application, the operation state includes stable and unstable.

Step S160: when the operation state is unstable, repeatedly perform adjustments according to the adjustment strategy, and repeatedly determine the operation state until the operation state is stable.

In the related art, blast furnace stability is maintained by stabilizing raw material quality and blast air supply. The fluctuations in these factors affecting blast furnace stability are relatively small and are well controlled. After analyzing the related art, the inventors have found that the carbon cycle blast furnace introduces blown gas as an additional unstable factor, increasing the risk of fluctuations in blast furnace operating conditions compared to traditional blast furnaces. Moreover, compared to other factors such as fluctuations in raw material conditions, the blown gas, as a secondary energy source, has greater frequency and range of fluctuations in composition and generation amount, making it more difficult to control. Blowing gas with large fluctuations into the blast furnace results in difficulty stabilizing the operation of the carbon cycle blast furnace, thereby failing to achieve effective substitution of solid fuel by recycled gas, ultimately leading to unsatisfactory carbon reduction effects in the blast furnace smelting process. Therefore, the inventors have considered obtaining the type of recycled gas used in blast furnace production, the real-time amount of recycled gas, the real-time content of each component in the recycled gas, and the real-time average specific heat capacity of the recycled gas; determining the adjustment strategy based on the real-time amount of recycled gas, the real-time content of each component, and the type of recycled gas; adjusting the blast furnace production conditions accordingly; performing production according to the adjusted conditions; obtaining real-time output, real-time production indicators, substitution ratio of recycled gas, heat data, and gas volume generated by fuel combustion before the tuyeres; determining the operation state based on heat data, gas volume generated by fuel combustion before the tuyeres, substitution ratio, and production indicators; and if the operation state is unstable, repeatedly performing adjustment and determination until the operation state is stable. That is, during the blast furnace production process, the present application can realize stable operation of the carbon cycle blast furnace by collaboratively adjusting process conditions, thereby improving the substitution ratio of recycled gas for solid fuel and reducing carbon emissions in blast furnace smelting.

Referring to FIG. 2, FIG. 2 is a flowchart illustrating the process of determining an adjustment strategy in an exemplary embodiment of the embodiment shown in FIG. 1.

As shown in FIG. 2, in an exemplary embodiment of the present application, the process of determining the adjustment strategy in the embodiment shown in FIG. 1 includes steps S210 to S230, which are described in detail as follows:

Step S210: determining a fluctuation amount of the recycled gas based on the real-time amounts of recycled gas at adjacent time points.

Specifically, the difference between the real-time amount of recycled gas at a later adjacent time point and that at a prior adjacent time point is defined as the fluctuation amount of the recycled gas;

Step S220: determining a fluctuation amount of calorific value based on the real-time content of each component in the recycled gas.

Step S230: determining the adjustment strategy based on the type of recycled gas, the fluctuation amount of the recycled gas, and the fluctuation amount of the calorific value.

Referring to FIG. 3, FIG. 3 is a flowchart illustrating the process of determining the fluctuation amount of calorific value in an exemplary embodiment of the embodiment shown in FIG. 2.

As shown in FIG. 3, in an exemplary embodiment of the present application, the process of determining the fluctuation amount of calorific value in the embodiment shown in FIG. 2 includes steps S310 and S320, which are described in detail as follows:

Step S310: determining the real-time calorific value of the recycled gas based on the real-time content of each component in the recycled gas.

Exemplarily, the real-time calorific value of the recycled gas is determined according to formula (I):

$$Q_{recycled\ gas} = (30.2 \times \omega_{CO} + 25.7 \times \omega_{H_2} + 85.7 \times \omega_{CH_4}) \times 100 \times 4.18 \qquad (\text{I});$$

$Q_{recycled\ gas}$ is the real-time calorific value of the recycled gas in units of kJ/Nm³; $\omega_{CO}$ is the volumetric fraction of

carbon monoxide in the recycled gas; $\omega_{H_2}$ is the volumetric fraction of hydrogen in the recycled gas; $\omega_{CH_4}$, is the volumetric fraction of methane in the recycled gas.

**[0036]** Step S320: determining the fluctuation amount of calorific value based on the real-time calorific values of the recycled gas at adjacent time points.

**[0037]** Specifically, the difference between the real-time calorific value at a later adjacent time point and that at a prior adjacent time point is defined as the fluctuation amount of calorific value.

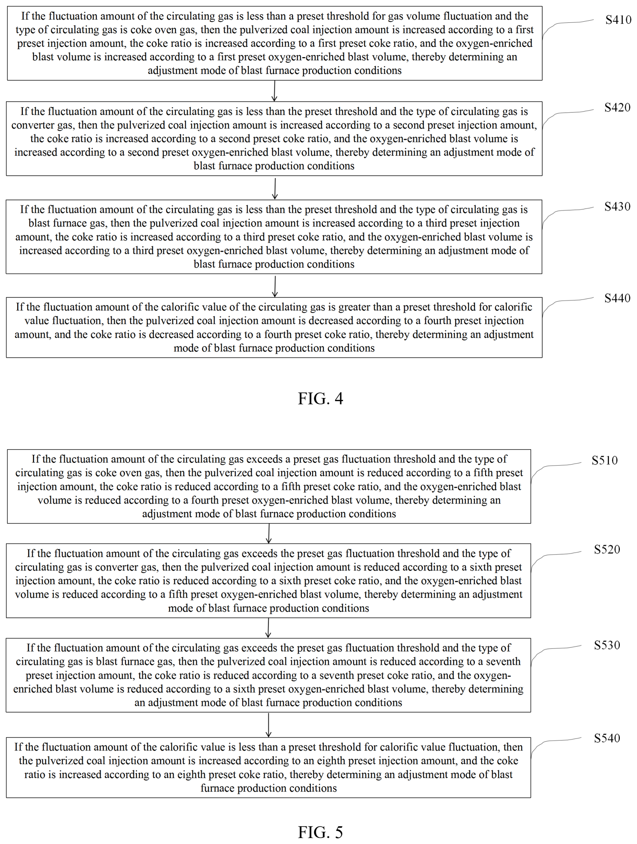

**[0038]** Referring to FIG. 4, FIG. 4 is a flowchart illustrating the process of determining the adjustment strategy in an exemplary embodiment of the embodiment shown in FIG. 2.

**[0039]** As shown in FIG. 4, in an exemplary embodiment of the present application, the types of recycled gas include coke oven gas, converter gas, and blast furnace gas. The process of determining the adjustment strategy in the embodiment shown in FIG. 2 includes steps S410 to S440, which are described in detail as follows:

Step S410: when the fluctuation amount of recycled gas is less than a preset threshold of gas amount fluctuation and the recycled gas type is coke oven gas, increasing pulverized coal injection amount according to a first preset injection amount, increasing coke ratio according to a first preset coke ratio, and increasing oxygen-enriched blast volume according to a first preset oxygen-enriched blast volume, determining the adjustment mode of blast furnace production conditions accordingly.

**[0040]** Step S420: when the fluctuation amount of recycled gas is less than the preset threshold of gas amount fluctuation and the recycled gas type is converter gas, increasing pulverized coal injection amount according to a second preset injection amount, increasing coke ratio according to a second preset coke ratio, and increasing oxygen-enriched blast volume according to a second preset oxygen-enriched blast volume, determining the adjustment mode of blast furnace production conditions accordingly.

**[0041]** Step S430: when the fluctuation amount of recycled gas is less than the preset threshold of gas amount fluctuation and the recycled gas type is blast furnace gas, increasing pulverized coal injection amount according to a third preset injection amount, increasing coke ratio according to a third preset coke ratio, and increasing oxygen-enriched blast volume according to a third preset oxygen-enriched blast volume, determining the adjustment mode of blast furnace production conditions accordingly.

**[0042]** Step S440: when the fluctuation amount of calorific value is greater than a preset threshold, decreasing pulverized coal injection amount according to a fourth preset injection amount, decreasing coke ratio according to a fourth preset coke ratio, determining the adjustment mode of blast furnace production conditions accordingly.

**[0043]** It should be noted that the preset threshold of gas amount fluctuation, the first to fourth preset injection amounts, the first to fourth preset coke ratios, the first to third preset oxygen-enriched blast volumes, and the preset threshold of calorific value fluctuation can be set arbitrarily and are not further detailed herein.

**[0044]** Referring to FIG. 5, FIG. 5 is a flowchart illustrating the process of determining the adjustment strategy in another exemplary embodiment of the embodiment shown in FIG. 2.

**[0045]** As shown in FIG. 5, in another exemplary embodiment of the present application, the process of determining the adjustment strategy in the embodiment shown in FIG. 2 further includes steps S510 to S540, which are described in detail as follows:

Step S510: when the fluctuation amount of recycled gas is greater than a preset threshold of gas amount fluctuation and the recycled gas type is coke oven gas, decreasing pulverized coal injection amount according to a fifth preset injection amount, decreasing coke ratio according to a fifth preset coke ratio, and decreasing oxygen-enriched blast volume according to a fourth preset oxygen-enriched blast volume, determining the adjustment mode of blast furnace production conditions accordingly.

**[0046]** Step S520: when the fluctuation amount of recycled gas is greater than the preset threshold of gas amount fluctuation and the recycled gas type is converter gas, decreasing pulverized coal injection amount according to a sixth preset injection amount, decreasing coke ratio according to a sixth preset coke ratio, and decreasing oxygen-enriched blast volume according to a fifth preset oxygen-enriched blast volume, determining the adjustment mode of blast furnace production conditions accordingly.

**[0047]** Step S530: when the fluctuation amount of recycled gas is greater than the preset threshold of gas amount fluctuation and the recycled gas type is blast furnace gas, decreasing pulverized coal injection amount according to a seventh preset injection amount, decreasing coke ratio according to a seventh preset coke ratio, and decreasing oxygen-enriched blast volume according to a sixth preset oxygen-enriched blast volume, determining the adjustment mode of blast furnace production conditions accordingly.

**[0048]** Step S540: when the fluctuation amount of calorific value is less than a preset threshold, increasing pulverized coal injection amount according to an eighth preset injection amount and increasing coke ratio according to an eighth preset coke ratio, determining the adjustment mode of blast furnace production conditions accordingly.

**[0049]** It should be noted that the fifth preset injection amount, fifth preset coke ratio, fourth preset oxygen-enriched blast volume, sixth preset injection amount, sixth preset coke ratio, fifth preset oxygen-enriched blast volume, seventh preset injection amount, seventh preset coke ratio, sixth preset oxygen-enriched blast volume, eighth preset injection amount,

eighth preset coke ratio, and eighth preset oxygen-enriched blast volume can be set arbitrarily, and are not further detailed herein.

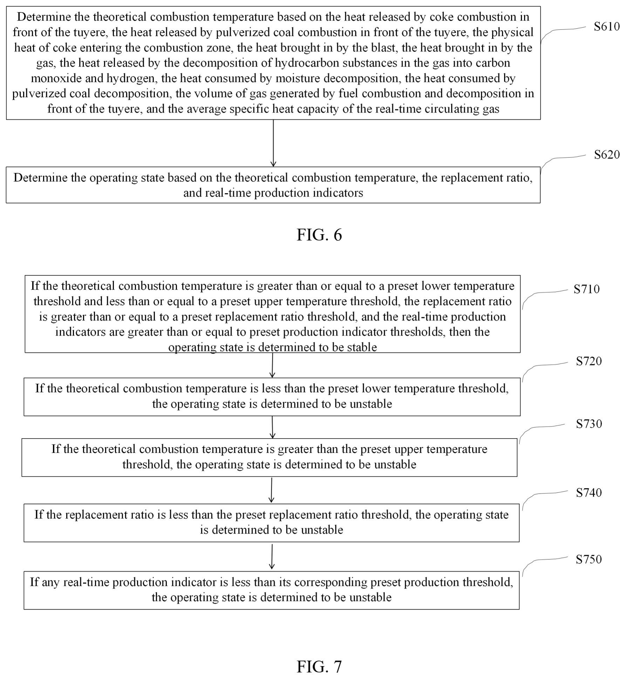

Referring to FIG. 6, FIG. 6 is a flowchart illustrating the process of determining the operation state in an exemplary embodiment of the embodiment shown in FIG. 1.

As shown in FIG. 6, in an exemplary embodiment of the present application, the heat data includes heat released from coke combustion before the tuyere, heat released from pulverized coal combustion before the tuyere, physical heat when coke enters the combustion zone, heat introduced by blast air, heat introduced by gas, heat released by the decomposition of hydrocarbons in the gas into carbon monoxide and hydrogen, heat consumed by moisture decomposition, and heat consumed by pulverized coal decomposition. The process of determining the operation state in the embodiment shown in FIG. 1 includes steps S610 and S620, which are described in detail as follows:

Step S610: determining the theoretical combustion temperature based on the heat released from coke combustion before the tuyere, the heat released from pulverized coal combustion before the tuyere, the physical heat when coke enters the combustion zone, heat introduced by blast air, heat introduced by gas, heat released by the decomposition of hydrocarbons in the gas into carbon monoxide and hydrogen, heat consumed by moisture decomposition, heat consumed by pulverized coal decomposition, the volume of gas formed by fuel combustion before the tuyere, and the real-time average specific heat capacity of the recycled gas.

Exemplarily, the theoretical combustion temperature is determined according to formula (II):

$$TF = \frac{Q_{C_{coke}} + Q_{C_{coal}} + Q_{combustion\ zone} + Q_{blast} + Q_{coal\ gas} + Q_{decomposition} - Q_{moisture\ decomposition} - Q_{pulverized\ coal}}{V_{coal\ gas} \times c_{coal\ gas}} \quad (II)\ ;$$

wherein, TF is the theoretical combustion temperature, with the unit of K; $Q_{C_{coke}}$ is the heat released from the combustion of coke before the tuyere, with the unit of J/t; $Q_{C_{coal}}$ is the heat released from the combustion of pulverized coal before the tuyere, with the unit of kJ/t; $Q_{combustion\ zone}$ is the physical heat carried into the combustion zone by coke, with the unit of J; $Q_{blast}$ is the heat introduced by the blast, with the unit of kJ/t; $Q_{coal\ gas}$ is the heat introduced by the coal gas, with the unit of kJ/t; $Q_{decomposition}$ is the heat released by the decomposition of hydrocarbon substances in the coal gas into carbon monoxide and hydrogen, with the unit of kJ/t; $Q_{moisture\ decomposition}$ is the heat consumed by moisture decomposition (i.e., the total heat consumed by the decomposition of moisture contained in the raw materials), with the unit of kJ/t; $Q_{pulverized\ coal}$ is the heat consumed by the decomposition of pulverized coal, with the unit of kJ/t; $V_{coal\ gas}$ is the amount of coal gas formed by the combustion and decomposition of fuel before the tuyere (here referring to volume), with the unit of m³/t; $c_{coal\ gas}$ is the average specific heat capacity of the real-time circulating coal gas (here referring to volumetric specific heat capacity), with the unit of kJ/m³/K;

Step S620: based on the theoretical combustion temperature, displacement ratio, and real-time production indicators, determine the operating status.

Refer to FIG. 7, which is a flowchart of determining the operating status in an exemplary embodiment of the embodiment shown in FIG. 6.

As shown in FIG. 7, in an exemplary embodiment of the present application, the process for determining the operating status in the embodiment shown in FIG. 6 includes steps S710 to S750, detailed as follows:

Step S710: if the theoretical combustion temperature is greater than or equal to the preset lower temperature threshold and less than or equal to the preset upper temperature threshold, the displacement ratio is greater than or equal to the preset displacement ratio threshold, and the real-time production indicators are greater than or equal to the preset production indicator thresholds, the operating status is determined to be stable.

Specifically, if the theoretical combustion temperature is greater than the preset lower temperature threshold and less than the preset upper temperature threshold, the displacement ratio is greater than or equal to the preset displacement ratio threshold, and the real-time production indicators are greater than or equal to the preset production indicator thresholds (i.e., each real-time production indicator is greater than or equal to its corresponding preset production indicator threshold), the operating status is determined to be stable.

Step S720: if the theoretical combustion temperature is less than the preset lower temperature threshold, the operating status is determined to be unstable.

Step S730: if the theoretical combustion temperature is greater than the preset upper temperature threshold, the operating status is determined to be unstable.

Step S740: if the displacement ratio is less than the preset displacement ratio threshold, the operating status is determined to be unstable.

Step S750: if the real-time production indicators are less than the preset production indicator thresholds, the operating status is determined to be unstable.

Specifically, if any one of the real-time production indicators is less than its corresponding preset production indicator threshold, the operating status is determined to be unstable.

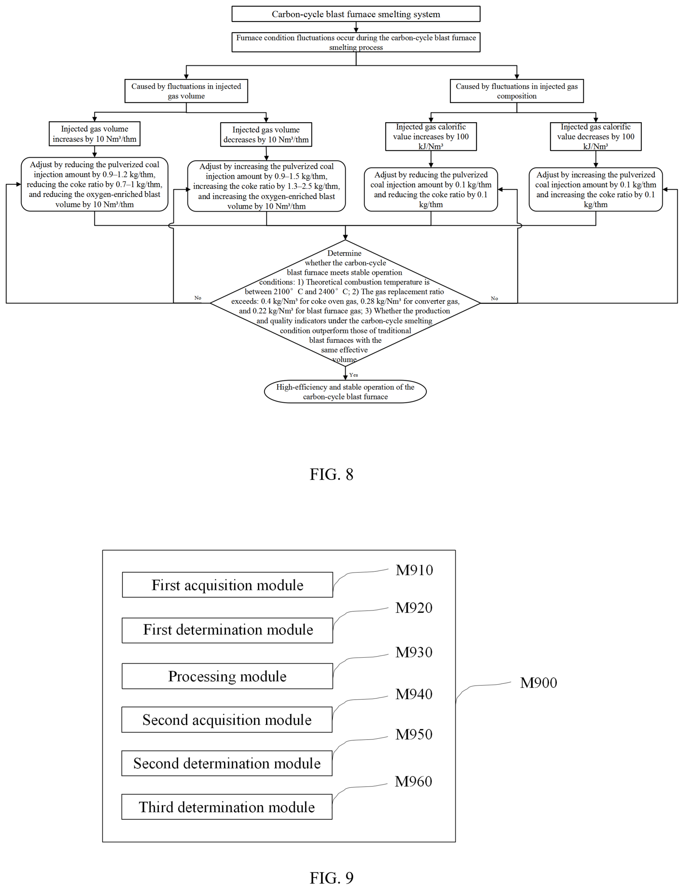

Refer to FIG. 8, which is a flowchart of the production control method for a stable carbon cycle blast furnace shown in a specific embodiment.

As shown in FIG. 8, the steps of the production control method for the stable carbon cycle blast furnace are as follows:

Obtaining the types of circulating coal gas produced by the blast furnace, the real-time amount of circulating coal gas, the real-time content of each component in the circulating coal gas, and the real-time average specific heat capacity of the circulating coal gas. The types of circulating coal gas include coke oven gas, converter gas, and blast furnace gas. The real-time average specific heat capacity of the circulating coal gas is obtained by summing the products of the real-time content of each component and the specific heat capacity of the corresponding component in the circulating coal gas.

Determining the fluctuation amount of the circulating coal gas based on the real-time amounts of circulating coal gas at adjacent time points. Specifically, the fluctuation amount of circulating coal gas is obtained by subtracting the real-time amount at the preceding adjacent time point from that at the subsequent adjacent time point.

Determining the real-time calorific value of the circulating coal gas according to formula (I) based on the real-time content of each component in the circulating coal gas:

$$Q_{coal\ gas} = (30.2 \times \omega_{CO} + 25.7 \times \omega_{H_2} + 85.7 \times \omega_{CH_4}) \times 100 \times 4.18 \qquad (I) ;$$

wherein, $Q_{coal\ gas}$ is the real-time calorific value of the circulating coal gas, with the unit of kJ/Nm$^3$; $\omega_{CO}$ is the volume fraction of carbon monoxide gas in the circulating coal gas; $\omega_{H_2}$ is the volume fraction of hydrogen gas in the circulating coal gas; $\omega_{CH_4}$ is the volume fraction of methane in the circulating coal gas.

Determining the calorific value fluctuation amount based on the real-time calorific values of circulating coal gas at adjacent time points. Specifically, the fluctuation amount is obtained by subtracting the real-time calorific value at the preceding adjacent time point from that at the subsequent adjacent time point.

Based on the type of circulating coal gas, circulating coal gas fluctuation amount, and calorific value fluctuation amount, determine the adjustment strategy.

Specifically, if the circulating coal gas fluctuation amount is less than the preset threshold of 10 Nm$^3$/thm for gas volume fluctuation, meaning the circulating coal gas volume decreases by 10 Nm$^3$/thm, and the circulating coal gas type is coke oven gas, then the pulverized coal injection amount will be increased by the first preset injection amount of 1.5 kg/thm, the coke ratio will be increased by the first preset coke ratio of 2.5 kg/thm, and the oxygen-enriched blast volume will be increased by the first preset oxygen-enriched blast volume of 10 Nm$^3$/thm, determining the adjustment method for blast furnace production conditions.

If the circulating coal gas fluctuation amount is less than the preset threshold of 10 Nm$^3$/thm, meaning the circulating coal gas volume decreases by 10 Nm$^3$/thm, and the circulating coal gas type is converter gas, then the pulverized coal injection amount will be increased by the second preset injection amount of 1 kg/thm, the coke ratio will be increased by the second preset coke ratio of 1.8 kg/thm, and the oxygen-enriched blast volume will be increased by the second preset oxygen-enriched blast volume of 10 Nm$^3$/thm, determining the adjustment method for blast furnace production conditions.

If the circulating coal gas fluctuation amount is less than the preset threshold of 10 Nm$^3$/thm, meaning the circulating coal gas volume decreases by 10 Nm$^3$/thm, and the circulating coal gas type is blast furnace gas, then the pulverized coal injection amount will be increased by the third preset injection amount of 0.9 kg/thm, the coke ratio will be increased by the third preset coke ratio of 1.3 kg/thm, and the oxygen-enriched blast volume will be increased by the third preset oxygen-enriched blast volume of 10 Nm$^3$/thm, determining the adjustment method for blast furnace production conditions.

If the circulating coal gas fluctuation amount is greater than the preset threshold of 10 Nm$^3$/thm, and the circulating coal gas type is coke oven gas, then the pulverized coal injection amount will be decreased by the fifth preset injection amount of 1.2 kg/thm, the coke ratio will be decreased by the fifth preset coke ratio of 1 kg/thm, and the oxygen-enriched blast volume will be decreased by the fourth preset oxygen-enriched blast volume of 10 Nm$^3$/thm, determining the adjustment method for blast furnace production conditions.

If the circulating coal gas fluctuation amount is greater than the preset threshold of 10 Nm$^3$/thm, meaning the circulating coal gas volume increases by 10 Nm$^3$/thm, and the circulating coal gas type is converter gas, then the pulverized coal injection amount will be decreased by the sixth preset injection amount of 1 kg/thm (actually decreasing by 0.8 kg/thm), the coke ratio will be decreased by the sixth preset coke ratio of 0.8 kg/thm (actually decreasing by 1 kg/thm), and the oxygen-enriched blast volume will be decreased by the sixth preset oxygen-enriched blast volume of 10 Nm$^3$/thm, determining the adjustment method for blast furnace production conditions.

EP 4 647 858 A1

If the circulating coal gas fluctuation amount is greater than the preset threshold of 10 Nm³/thm, meaning the circulating coal gas volume increases by 10 Nm³/thm, and the circulating coal gas type is blast furnace gas, then the pulverized coal injection amount will be decreased by the seventh preset injection amount of 0.9 kg/thm, the coke ratio will be decreased by the seventh preset coke ratio of 0.7 kg/thm, and the oxygen-enriched blast volume will be decreased by the seventh preset oxygen-enriched blast volume of 10 Nm³/thm, determining the adjustment method for blast furnace production conditions.

If the calorific value fluctuation amount is greater than the preset calorific value fluctuation threshold of 100 kJ/Nm³, the pulverized coal injection amount will be decreased by the fourth preset injection amount of 0.1 kg/thm, and the coke ratio will be decreased by the fourth preset coke ratio of 0.1 kg/thm, determining the adjustment method for blast furnace production conditions.

If the calorific value fluctuation amount is less than the preset calorific value fluctuation threshold of 100 kJ/Nm³, the pulverized coal injection amount will be increased by the eighth preset injection amount of 0.1 kg/thm, and the coke ratio will be increased by the eighth preset coke ratio of 0.1 kg/thm, determining the adjustment method for blast furnace production conditions.

If both circulating coal gas and calorific value fluctuate simultaneously, the adjustment amounts for pulverized coal injection and coke ratio can be combined from their respective adjustment amplitudes for fluctuations in circulating coal gas and calorific value. For example, if the circulating coal gas fluctuation amount exceeds the preset threshold of 10 Nm³/thm (an increase of 10 Nm³/thm), the calorific value fluctuation exceeds the preset threshold of 100 kJ/Nm³, and the circulating coal gas type is blast furnace gas, then the pulverized coal injection amount adjustment will be the sum of the seventh preset injection amount decrease of 0.9 kg/thm plus the fourth preset injection amount decrease of 0.1 kg/thm, totaling a 1.0 kg/thm decrease. The coke ratio adjustment will be the sum of the seventh preset coke ratio decrease of 0.7 kg/thm plus the fourth preset coke ratio decrease of 0.1 kg/thm, totaling a 0.8 kg/thm decrease, serving as the adjustment method for pulverized coal injection and coke ratio.

Adjust the blast furnace production conditions according to the adjustment strategy, and conduct production according to the adjusted blast furnace production conditions.

Obtain the real-time output, real-time production indicators, displacement ratio of circulating coal gas, heat data, and the amount of coal gas formed by fuel combustion before the tuyere under the adjusted blast furnace production conditions. The heat data includes heat released by coke combustion before the tuyere, heat released by pulverized coal combustion before the tuyere, physical heat carried by coke entering the combustion zone, heat introduced by blast, heat introduced by coal gas, heat released by decomposition of hydrocarbons in coal gas into carbon monoxide and hydrogen, heat consumed by moisture decomposition, and heat consumed by pulverized coal decomposition. Real-time production indicators include hot metal output, blast furnace utilization coefficient (i.e., effective volume utilization coefficient of the blast furnace), energy consumption, and comprehensive fuel ratio.

Based on the heat released by coke combustion before the tuyere, heat released by pulverized coal combustion before the tuyere, physical heat carried by coke entering the combustion zone, heat introduced by blast, heat introduced by coal gas, heat released by decomposition of hydrocarbons in coal gas into carbon monoxide and hydrogen, heat consumed by moisture decomposition, heat consumed by pulverized coal decomposition, the volume of coal gas formed by fuel combustion before the tuyere, and the average specific heat capacity of real-time circulating coal gas, determine the theoretical combustion temperature according to formula (II):

$$TF = \frac{Q_{C_{coke}} + Q_{C_{coal}} + Q_{combustion\ zone} + Q_{blast} + Q_{coal\ gas} + Q_{decomposition} - Q_{moisture\ decomposition} - Q_{pulverized\ coal}}{V_{coal\ gas} \times c_{coal\ gas}} \quad (II);$$

wherein, TF is the theoretical combustion temperature, with the unit of K; $Q_{C_{coke}}$ is the heat released from the combustion of coke before the tuyere, with the unit of J/t; $Q_{C_{coal}}$ is the heat released from the combustion of pulverized coal before the tuyere, with the unit of kJ/t; $Q_{combustion\ zone}$ is the physical heat carried into the combustion zone by coke, with the unit of J; $Q_{blast}$ is the heat introduced by the blast, with the unit of kJ/t; $Q_{coal\ gas}$ is the heat introduced by the coal gas, with the unit of kJ/t; $Q_{decomposition}$ is the heat released by the decomposition of hydrocarbon substances in the coal gas into carbon monoxide and hydrogen, with the unit of kJ/t; $Q_{moisture\ decomposition}$ is the heat consumed by moisture decomposition (i.e., the total heat consumed by the decomposition of moisture contained in the raw materials), with the unit of kJ/t; $Q_{pulverized\ coal}$ is the heat consumed by the decomposition of pulverized coal, with the unit of kJ/t; $V_{coal\ gas}$ is the amount of coal gas formed by the combustion and decomposition of fuel before the tuyere (here referring to volume), with the unit of m³/t; c is the average specific heat capacity of the real-time circulating coal gas (here referring to volumetric specific heat capacity), with the unit of kJ/m³/K.

12

Determine the operating state based on the theoretical combustion temperature, displacement ratio, and real-time production indicators, specifically:

If the theoretical combustion temperature is greater than or equal to the preset lower temperature threshold of 2373 K (i.e., 2100°C) and less than or equal to the preset upper temperature threshold of 2673 K (i.e., 2300°C), the displacement ratio is greater than or equal to the preset displacement ratio thresholds (0.4 kg/Nm$^3$ for coke oven gas, 0.28 kg/Nm$^3$ for converter gas, and 0.22 kg/Nm$^3$ for blast furnace gas), and the real-time production indicators are greater than or equal to the preset production indicator thresholds, then the operating state is determined to be stable.

Specifically, if the theoretical combustion temperature is greater than the preset lower temperature threshold and less than the preset upper temperature threshold, the displacement ratio is greater than or equal to the preset displacement ratio threshold, and the real-time production indicators are greater than or equal to the preset production indicator thresholds (i.e., each real-time production indicator is greater than or equal to its corresponding preset threshold), the operating state is determined to be stable.

If the theoretical combustion temperature is less than the preset lower temperature threshold of 2373 K (i.e., 2100°C), the operating state is determined to be unstable.

If the theoretical combustion temperature is greater than the preset upper temperature threshold of 2673 K (i.e., 2300°C), the operating state is determined to be unstable.

If the displacement ratio is less than the preset displacement ratio threshold (0.4 kg/Nm$^3$ for coke oven gas, 0.28 kg/Nm$^3$ for converter gas, and 0.22 kg/Nm$^3$ for blast furnace gas), the operating state is determined to be unstable.

If any real-time production indicator is less than the corresponding preset production indicator threshold, the operating state is determined to be unstable.

If the operating state is unstable, repeatedly adjust the blast furnace production conditions according to the adjustment strategy and repeatedly determine the operating state until the operating state is stable.

Refer to Figure 9, which is a block diagram of a production control system M900 for a stable carbon cycle blast furnace according to an exemplary embodiment of the present application.

As shown in Figure 9, the production control system M900 for the stable carbon cycle blast furnace in the embodiment of the present application includes:

a first acquisition module M910, configured to acquire the type of circulating coal gas for blast furnace production, real-time quantity of circulating coal gas, real-time content of each component in the circulating coal gas, and the real-time average specific heat capacity of the circulating coal gas;

a first determination module M920, configured to determine the adjustment strategy based on the real-time quantity of circulating coal gas, real-time content of each component in the circulating coal gas, and the type of circulating coal gas;

a processing module M930, configured to adjust the blast furnace production conditions according to the adjustment strategy, and to produce according to the adjusted blast furnace production conditions;

a second acquisition module M940, configured to acquire the real-time output, real-time production indicators, displacement ratio of circulating coal gas, heat data, and the amount of coal gas formed by fuel combustion before the tuyere according to the adjusted blast furnace production conditions;

a second determination module M950, configured to determine the operating state based on the heat data, the amount of coal gas formed by fuel combustion before the tuyere, displacement ratio, and real-time production indicators, the operating state including stable and unstable; and

a third determination module M960, configured, if the operating state is unstable, to repeatedly adjust according to the adjustment strategy and repeatedly determine the operating state until it becomes stable.

It should be noted that the production control system for the stable carbon cycle blast furnace provided in the above embodiment and the production control method for the stable carbon cycle blast furnace provided in the above embodiment belong to the same inventive concept. The specific manners in which each module and unit perform operations have been described in detail in the method embodiment and will not be repeated here. In practical applications, the production control system for the stable carbon cycle blast furnace provided in the above embodiment may allocate the above functions to different functional modules as needed, that is, dividing the internal structure of the device into different functional modules to accomplish all or part of the described functions, which is not limited herein.

The embodiments of the present application further provide an electronic device, comprising: one or more processors; A storage device configured to store one or more programs which, when executed by the one or more processors, enable the electronic device to implement the production control method for a stable carbon cycle blast furnace as provided in the foregoing embodiments.

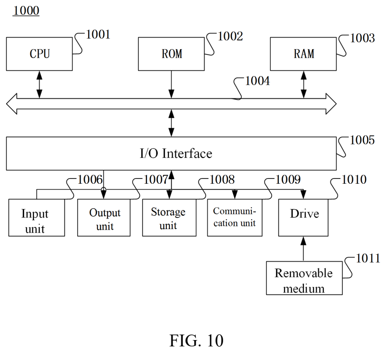

Figure 10 illustrates a schematic structural diagram of a computer system suitable for implementing the electronic device according to the embodiments of the present application. It should be noted that the computer system 1000 shown in Figure 10 is only an example and should not impose any limitation on the functionality and application scope of the embodiments of the present application.

As shown in Figure 10, the computer system 1000 includes a Central Processing Unit (CPU) 1001, which can perform various appropriate operations and processing according to programs stored in a Read-Only Memory (ROM) 1002 or programs loaded into a Random Access Memory (RAM) 1003 from a storage unit 1008, such as executing the methods described in the above embodiments. Various programs and data required for system operation are also stored in RAM 1003. The CPU 1001, ROM 1002, and RAM 1003 are interconnected via a bus 1004. An Input/Output (I/O) interface 1005 is also connected to the bus 1004.

The following components are connected to the I/O interface 1005: an input unit 1006 including a keyboard, mouse, and the like; an output unit 907 including devices such as a Cathode Ray Tube (CRT), a Liquid Crystal Display (LCD), and speakers; a storage unit 1008 such as a hard disk; and a communication unit 1009 including network interface cards such as a LAN card or a modem. The communication unit 1009 performs communication processing via a network such as the Internet. A drive 1010 is also connected to the I/O interface 1005 as needed. A removable medium 1011, such as a magnetic disk, optical disk, magneto-optical disk, or semiconductor memory, etc., is mounted on the drive 1010 as needed so that computer programs read from it can be installed into the storage unit 1008 as needed.

Specifically, according to the embodiments of the present application, the processes described above with reference to flowcharts can be implemented as computer software programs. For example, an embodiment of the present application includes a computer program product comprising a computer program carried on a computer-readable medium, the computer program comprising instructions for performing the methods illustrated in the flowcharts. In such an embodiment, the computer program may be downloaded and installed from a network via the communication unit 1009, and/or installed from the removable medium 911. When the computer program is executed by the Central Processing Unit (CPU) 1001, it performs various functions defined in the system of the present application.

It should be noted that the computer-readable medium described in the embodiments of the present application may be a computer-readable signal medium or a computer-readable storage medium, or any combination thereof. The computer-readable storage medium may include, for example, an electrical, magnetic, optical, electromagnetic, infrared, or semiconductor system, device, or apparatus, or any combination thereof. More specific examples of the computer-readable storage medium may include, but are not limited to: an electrical connection with one or more wires, a portable computer diskette, a hard disk, a Random Access Memory (RAM), a Read-Only Memory (ROM), an Erasable Programmable Read-Only Memory (EPROM), flash memory, optical fiber, a portable Compact Disc Read-Only Memory (CD-ROM), optical storage devices, magnetic storage devices, or any suitable combination of the above. In this application, a computer-readable signal medium may include a data signal propagated in baseband or as part of a carrier wave, carrying a computer-readable program. Such propagated data signals can take various forms, including but not limited to electromagnetic signals, optical signals, or any suitable combination thereof. A computer-readable signal medium can also be any computer-readable medium other than a storage medium that can transmit, propagate, or carry instructions for use by or in connection with an instruction execution system, device, or apparatus. The computer program contained on the computer-readable medium may be transmitted using any appropriate medium, including but not limited to wireless, wireline, or any suitable combination thereof.

The flowcharts and block diagrams in the figures illustrate possible implementations of system architectures, functions, and operations of the systems, methods, and computer program products according to various embodiments of the present application. Each block in the flowcharts or block diagrams may represent a module, program segment, or portion of code, which contains one or more executable instructions for implementing specified logical functions. It should also be noted that in some alternative implementations, the functions noted in the blocks may be performed in an order different from that illustrated in the figures. For example, two blocks shown in succession may in fact be executed substantially concurrently, or they may sometimes be executed in the reverse order, depending on the functions involved. It should also be noted that each block in the block diagrams or flowcharts, and combinations of blocks, can be implemented by special-purpose hardware-based systems performing the specified functions or operations, or by combinations of special-purpose hardware and computer instructions.

The units described in the embodiments of the present application may be implemented in software or hardware, and may also be integrated within a processor. The naming of these units does not necessarily impose any limitation on the actual structure or function of the units.

Another aspect of the present application also provides a computer-readable storage medium on which a computer program is stored. When executed by a processor, the computer program causes the computer to perform the production control method for a stable carbon cycle blast furnace as described above. The computer-readable storage medium may be included in the electronic device described in the above embodiments, or it may exist independently without being integrated into the electronic device.

Another aspect of the present application further provides a computer program product or computer program, which includes computer instructions stored on a computer-readable storage medium. A processor of the computing device reads the instructions from the computer-readable storage medium and executes the instructions, thereby enabling the computing device to perform the production control method for a stable carbon cycle blast furnace as provided in the above embodiments.

The above embodiments are merely illustrative of the principles and effectiveness of the present invention, and are not intended to limit the invention. Any person skilled in the art may make modifications or changes to the above embodiments without departing from the spirit and scope of the present invention. Therefore, all equivalent modifications or changes made by those of ordinary skill in the art without departing from the spirit and technical ideas disclosed by the present invention shall still fall within the scope of protection defined by the claims of the present invention.

**Claims**

1. A production control method for a stable carbon cycle blast furnace, comprising:

   acquiring types of circulating gas generated during blast furnace production, a real-time flow rate of the circulating gas, real-time contents of components in the circulating gas, and a real-time average specific heat capacity of the circulating gas;
   determining an adjustment strategy based on the real-time flow rate of the circulating gas, the real-time contents of the components in the circulating gas, and the types of the circulating gas;
   adjusting production conditions of the blast furnace according to the adjustment strategy, and performing production based on the adjusted production conditions;
   acquiring real-time output, real-time production indicators, a displacement ratio of the circulating gas, heat data, and an amount of gas generated by fuel combustion in front of a tuyere, under the adjusted production conditions;
   determining an operating state based on the heat data, the amount of gas generated by fuel combustion in front of the tuyere, the displacement ratio, and the real-time production indicators, wherein the operating state comprises a stable state and an unstable state;
   if the operating state is determined to be the unstable state, repeatedly adjusting the production conditions according to the adjustment strategy, and repeatedly determining the operating state until the operating state is determined to be the stable state.

2. The production control method for a stable carbon cycle blast furnace according to claim 1, wherein the step of determining the adjustment strategy comprises:

   determining a fluctuation amount of the circulating gas based on real-time flow rates of the circulating gas at adjacent time points;
   determining a calorific value fluctuation amount based on real-time contents of each component in the circulating gas;
   determining the adjustment strategy based on the types of the circulating gas, the fluctuation amount of the circulating gas, and the calorific value fluctuation amount.

3. The production control method for a stable carbon cycle blast furnace according to claim 2, wherein the step of determining the calorific value fluctuation amount comprises:

   determining a real-time calorific value of the circulating gas based on real-time contents of each component in the circulating gas;
   determining the calorific value fluctuation amount based on real-time calorific values of the circulating gas at adjacent time points.

4. The production control method for a stable carbon cycle blast furnace according to claim 2, wherein the types of the circulating gas comprise coke oven gas, converter gas, and blast furnace gas, and the step of determining the adjustment strategy comprises:

   if the fluctuation amount of the circulating gas is less than a preset threshold for gas fluctuation and the circulating gas type is coke oven gas, increasing the pulverized coal injection volume according to a first preset injection volume, increasing the coke ratio according to a first preset coke ratio, and increasing the oxygen-enriched blast volume according to a first preset oxygen-enriched blast volume, to determine an adjustment mode for the blast furnace production conditions;

if the fluctuation amount of the circulating gas is less than the preset threshold for gas fluctuation and the circulating gas type is converter gas, increasing the pulverized coal injection volume according to a second preset injection volume, increasing the coke ratio according to a second preset coke ratio, and increasing the oxygen-enriched blast volume according to a second preset oxygen-enriched blast volume, to determine an adjustment mode for the blast furnace production conditions;

if the fluctuation amount of the circulating gas is less than the preset threshold for gas fluctuation and the circulating gas type is blast furnace gas, increasing the pulverized coal injection volume according to a third preset injection volume, increasing the coke ratio according to a third preset coke ratio, and increasing the oxygen-enriched blast volume according to a third preset oxygen-enriched blast volume, to determine an adjustment mode for the blast furnace production conditions;

if the calorific value fluctuation amount is greater than a preset threshold for calorific value fluctuation, decreasing the pulverized coal injection volume according to a fourth preset injection volume and decreasing the coke ratio according to a fourth preset coke ratio, to determine an adjustment mode for the blast furnace production conditions.

5. The production control method for a stable carbon cycle blast furnace according to claim 4, wherein the step of determining the adjustment strategy further comprises:

if the fluctuation amount of the circulating gas is greater than a preset threshold for gas fluctuation and the circulating gas type is coke oven gas, decreasing the pulverized coal injection volume according to a fifth preset injection volume, decreasing the coke ratio according to a fifth preset coke ratio, and decreasing the oxygen-enriched blast volume according to a fourth preset oxygen-enriched blast volume, to determine an adjustment mode for the blast furnace production conditions;

if the fluctuation amount of the circulating gas is greater than the preset threshold for gas fluctuation and the circulating gas type is converter gas, decreasing the pulverized coal injection volume according to a sixth preset injection volume, decreasing the coke ratio according to a sixth preset coke ratio, and decreasing the oxygen-enriched blast volume according to a fifth preset oxygen-enriched blast volume, to determine an adjustment mode for the blast furnace production conditions;

if the fluctuation amount of the circulating gas is greater than the preset threshold for gas fluctuation and the circulating gas type is blast furnace gas, decreasing the pulverized coal injection volume according to a seventh preset injection volume, decreasing the coke ratio according to a seventh preset coke ratio, and decreasing the oxygen-enriched blast volume according to a sixth preset oxygen-enriched blast volume, to determine an adjustment mode for the blast furnace production conditions;

if the calorific value fluctuation amount is less than a preset threshold for calorific value fluctuation, increasing the pulverized coal injection volume according to an eighth preset injection volume and increasing the coke ratio according to an eighth preset coke ratio, to determine an adjustment mode for the blast furnace production conditions.

6. The production control method for a stable carbon cycle blast furnace according to claim 1, wherein the heat data comprises heat released from coke combustion in front of the tuyere, heat released from pulverized coal combustion in front of the tuyere, heat carried by the gas, heat released by decomposition of hydrocarbons in the gas into carbon monoxide and hydrogen, physical heat when coke enters the combustion zone, heat introduced by the blast, heat consumed by moisture decomposition, and heat consumed by pulverized coal decomposition, and the step of determining the operating state comprises:

determining a theoretical combustion temperature based on the heat released from coke combustion in front of the tuyere, heat released from pulverized coal combustion in front of the tuyere, heat carried by the gas, heat released by decomposition of hydrocarbons in the gas into carbon monoxide and hydrogen, physical heat when coke enters the combustion zone, heat introduced by the blast, heat consumed by moisture decomposition, heat consumed by pulverized coal decomposition, the volume of gas formed by fuel combustion in front of the tuyere, and the real-time average specific heat capacity of the circulating gas;

determining the operating state based on the theoretical combustion temperature, the displacement ratio, and real-time production indicators.

7. The production control method for a stable carbon cycle blast furnace according to claim 6, wherein the step of determining the operating state comprises:

if the theoretical combustion temperature is greater than or equal to a preset lower temperature threshold and less than or equal to a preset upper temperature threshold, the displacement ratio is greater than or equal to a preset displacement ratio threshold, and the real-time production indicators are greater than or equal to a preset production indicator threshold, the operating state is determined to be stable;

if the theoretical combustion temperature is less than the preset lower temperature threshold, the operating state is determined to be unstable;

if the theoretical combustion temperature is greater than the preset upper temperature threshold, the operating state is determined to be unstable;

if the displacement ratio is less than the preset displacement ratio threshold, the operating state is determined to be unstable;

if the real-time production indicators are less than the preset production indicator threshold, the operating state is determined to be unstable.

8. A production control system for a stable carbon cycle blast furnace, wherein the production control system comprises:

a first acquisition module configured to acquire types of circulating gas generated during blast furnace production, a real-time flow rate of the circulating gas, real-time contents of components in the circulating gas, and a real-time average specific heat capacity of the circulating gas;

a first determination module configured to determine an adjustment strategy based on the real-time flow rate of the circulating gas, the real-time contents of the components in the circulating gas, and the types of the circulating gas;

a processing module configured to adjust production conditions of the blast furnace according to the adjustment strategy, and to perform production based on the adjusted production conditions;

a second acquisition module configured to acquire real-time output, real-time production indicators, a displacement ratio of the circulating gas, heat data, and an amount of gas generated by fuel combustion in front of a tuyere, under the adjusted production conditions;

a second determination module configured to determine an operating state based on the heat data, the amount of gas generated by fuel combustion in front of the tuyere, the displacement ratio, and the real-time production indicators, wherein the operating state comprises a stable state and an unstable state;

a third determination module configured, when the operating state is unstable, to repeatedly adjust the production conditions according to the adjustment strategy, and repeatedly determine the operating state until the operating state is stable.

9. An electronic device, comprising:

one or more processors;

a storage device configured to store one or more programs, which, when the one or more programs are executed by the one or more processors, the electronic device is configured to implement the production control method for a stable carbon cycle blast furnace according to any one of claims 1 to 7.

10. A computer-readable storage medium, comprising:

a computer program, wherein when the computer program is executed by a processor of a computer, the computer is caused to execute the production control method for a stable carbon cycle blast furnace according to any one of claims 1 to 7.

S110

Acquire the type of recycled gas in blast furnace production, the real-time volume of the recycled gas, the real-time component content of the recycled gas, and the real-time average specific heat capacity of the recycled gas

S120

Determine an adjustment strategy based on the real-time volume of the recycled gas, the real-time component content of the recycled gas, and the type of the recycled gas

S130

Adjust the blast furnace production conditions according to the adjustment strategy, and perform production based on the adjusted blast furnace production conditions

S140

Acquire the real-time output, real-time production indicators, gas replacement ratio of the recycled gas, thermal data, and the gas volume generated by fuel combustion in front of the tuyere under the adjusted blast furnace production conditions

S150

Determine the operating state based on the thermal data, the gas volume generated by fuel combustion in front of the tuyere, the replacement ratio, and the real-time production indicators

S160

If the operating state is determined to be unstable, the adjustment is repeatedly performed according to the adjustment strategy, and the operating state is repeatedly determined until the operating state becomes stable

FIG. 1

S210

Determine the fluctuation amount of the circulating gas based on the real-time volume of the circulating gas at adjacent time points

S220

Determine the fluctuation amount of the calorific value based on the real-time content of each component in the circulating gas

S230

Determine the adjustment strategy based on the type of circulating gas, the fluctuation amount of the circulating gas, and the fluctuation amount of the calorific value

FIG. 2

S310

Determine the real-time calorific value of the circulating gas based on the real-time content of each component in the circulating gas

S320

Determine the fluctuation amount of the calorific value based on the real-time calorific values of the circulating gas at adjacent time points

FIG. 3

If the fluctuation amount of the circulating gas is less than a preset threshold for gas volume fluctuation and the type of circulating gas is coke oven gas, then the pulverized coal injection amount is increased according to a first preset injection amount, the coke ratio is increased according to a first preset coke ratio, and the oxygen-enriched blast volume is increased according to a first preset oxygen-enriched blast volume, thereby determining an adjustment mode of blast furnace production conditions — S410

If the fluctuation amount of the circulating gas is less than the preset threshold and the type of circulating gas is converter gas, then the pulverized coal injection amount is increased according to a second preset injection amount, the coke ratio is increased according to a second preset coke ratio, and the oxygen-enriched blast volume is increased according to a second preset oxygen-enriched blast volume, thereby determining an adjustment mode of blast furnace production conditions — S420

If the fluctuation amount of the circulating gas is less than the preset threshold and the type of circulating gas is blast furnace gas, then the pulverized coal injection amount is increased according to a third preset injection amount, the coke ratio is increased according to a third preset coke ratio, and the oxygen-enriched blast volume is increased according to a third preset oxygen-enriched blast volume, thereby determining an adjustment mode of blast furnace production conditions — S430

If the fluctuation amount of the calorific value of the circulating gas is greater than a preset threshold for calorific value fluctuation, then the pulverized coal injection amount is decreased according to a fourth preset injection amount, and the coke ratio is decreased according to a fourth preset coke ratio, thereby determining an adjustment mode of blast furnace production conditions — S440

FIG. 4

If the fluctuation amount of the circulating gas exceeds a preset gas fluctuation threshold and the type of circulating gas is coke oven gas, then the pulverized coal injection amount is reduced according to a fifth preset injection amount, the coke ratio is reduced according to a fifth preset coke ratio, and the oxygen-enriched blast volume is reduced according to a fourth preset oxygen-enriched blast volume, thereby determining an adjustment mode of blast furnace production conditions — S510

If the fluctuation amount of the circulating gas exceeds the preset gas fluctuation threshold and the type of circulating gas is converter gas, then the pulverized coal injection amount is reduced according to a sixth preset injection amount, the coke ratio is reduced according to a sixth preset coke ratio, and the oxygen-enriched blast volume is reduced according to a fifth preset oxygen-enriched blast volume, thereby determining an adjustment mode of blast furnace production conditions — S520

If the fluctuation amount of the circulating gas exceeds the preset gas fluctuation threshold and the type of circulating gas is blast furnace gas, then the pulverized coal injection amount is reduced according to a seventh preset injection amount, the coke ratio is reduced according to a seventh preset coke ratio, and the oxygen-enriched blast volume is reduced according to a sixth preset oxygen-enriched blast volume, thereby determining an adjustment mode of blast furnace production conditions — S530

If the fluctuation amount of the calorific value is less than a preset threshold for calorific value fluctuation, then the pulverized coal injection amount is increased according to an eighth preset injection amount, and the coke ratio is increased according to an eighth preset coke ratio, thereby determining an adjustment mode of blast furnace production conditions — S540

FIG. 5

Determine the theoretical combustion temperature based on the heat released by coke combustion in front of the tuyere, the heat released by pulverized coal combustion in front of the tuyere, the physical heat of coke entering the combustion zone, the heat brought in by the blast, the heat brought in by the gas, the heat released by the decomposition of hydrocarbon substances in the gas into carbon monoxide and hydrogen, the heat consumed by moisture decomposition, the heat consumed by pulverized coal decomposition, the volume of gas generated by fuel combustion and decomposition in front of the tuyere, and the average specific heat capacity of the real-time circulating gas

S610

Determine the operating state based on the theoretical combustion temperature, the replacement ratio, and real-time production indicators

S620

FIG. 6

If the theoretical combustion temperature is greater than or equal to a preset lower temperature threshold and less than or equal to a preset upper temperature threshold, the replacement ratio is greater than or equal to a preset replacement ratio threshold, and the real-time production indicators are greater than or equal to preset production indicator thresholds, then the operating state is determined to be stable

S710

If the theoretical combustion temperature is less than the preset lower temperature threshold, the operating state is determined to be unstable

S720

If the theoretical combustion temperature is greater than the preset upper temperature threshold, the operating state is determined to be unstable

S730

If the replacement ratio is less than the preset replacement ratio threshold, the operating state is determined to be unstable

S740

If any real-time production indicator is less than its corresponding preset production threshold, the operating state is determined to be unstable

S750

FIG. 7

Carbon-cycle blast furnace smelting system

Furnace condition fluctuations occur during the carbon-cycle blast furnace smelting process

Caused by fluctuations in injected gas volume

Caused by fluctuations in injected gas composition

Injected gas volume increases by 10 Nm³/thm

Injected gas volume decreases by 10 Nm³/thm

Injected gas calorific value increases by 100 kJ/Nm³

Injected gas calorific value decreases by 100 kJ/Nm³

Adjust by reducing the pulverized coal injection amount by 0.9–1.2 kg/thm, reducing the coke ratio by 0.7–1 kg/thm, and reducing the oxygen-enriched blast volume by 10 Nm³/thm

Adjust by increasing the pulverized coal injection amount by 0.9–1.5 kg/thm, increasing the coke ratio by 1.3–2.5 kg/thm, and increasing the oxygen-enriched blast volume by 10 Nm³/thm

Adjust by reducing the pulverized coal injection amount by 0.1 kg/thm and reducing the coke ratio by 0.1 kg/thm

Adjust by increasing the pulverized coal injection amount by 0.1 kg/thm and increasing the coke ratio by 0.1 kg/thm

Determine whether the carbon-cycle blast furnace meets stable operation conditions: 1) Theoretical combustion temperature is between 2100°C and 2400°C; 2) The gas replacement ratio exceeds: 0.4 kg/Nm³ for coke oven gas, 0.28 kg/Nm³ for converter gas, and 0.22 kg/Nm³ for blast furnace gas; 3) Whether the production and quality indicators under the carbon-cycle smelting condition outperform those of traditional blast furnaces with the same effective volume

No

No

Yes

High-efficiency and stable operation of the carbon-cycle blast furnace

FIG. 8

First acquisition module — M910

First determination module — M920

Processing module — M930

Second acquisition module — M940

Second determination module — M950

Third determination module — M960

M900

FIG. 9

1000

| CPU | 1001 | ROM | 1002 | RAM | 1003 |

1004

I/O Interface 1005

| 1006 | 1007 | 1008 | 1009 | 1010 |

| Input unit | Output unit | Storage unit | Communi-cation unit | Drive |

| Removable medium | 1011 |

FIG. 10

## INTERNATIONAL SEARCH REPORT

| International application No. |
| --- |
| **PCT/CN2023/130325** |

| **A.** | **CLASSIFICATION OF SUBJECT MATTER** |
| --- | --- |

G05B19/418(2006.01)i

According to International Patent Classification (IPC) or to both national classification and IPC

| **B.** | **FIELDS SEARCHED** |
| --- | --- |

Minimum documentation searched (classification system followed by classification symbols)

IPC:G05B19/-: C21B5/-

Documentation searched other than minimum documentation to the extent that such documents are included in the fields searched

Electronic data base consulted during the international search (name of data base and, where practicable, search terms used)

CNTXT, DWPI, CNABS, WPABS, WPABSC, CJFD, VEN: 稳定, 碳循环, 高炉, 生产, 控制, 调整, 策略, 稳定, 运行, 状态, 煤气, 循环, 含量, 比热容, 阈值, 喷吹, production, control, stable, carbon, circulation, blast, furnace, operating, status, heat, data, amount, gas, fuel, combustion, tuyere, replacement, ratio, indicator?

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| PX | CN 116203901 A (CISDI ENGINEERING CO., LTD.) 02 June 2023 (2023-06-02) claims 1-10 | 1-10 |
| A | CN 114277205 A (CISDI ENGINEERING CO., LTD.) 05 April 2022 (2022-04-05) description, paragraphs [0003]-[0070] | 1-10 |
| A | CN 101408314 A (SHOUGANG GENERAL CORP. et al.) 15 April 2009 (2009-04-15) entire document | 1-10 |
| A | CN 102888479 A (BEIJING SHOUGANG AUTOMATION INFORMATION TECHNOLOGY CO., LTD. et al.) 23 January 2013 (2013-01-23) entire document | 1-10 |
| A | CN 110968063 A (NANJING HANHUA FLUID TECHNOLOGY CO., LTD.) 07 April 2020 (2020-04-07) entire document | 1-10 |
| A | CN 111041140 A (SHANXI TAIGANG STAINLESS STEEL CO., LTD.) 21 April 2020 (2020-04-21) entire document | 1-10 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **18 December 2023** | **21 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
|---|
| **PCT/CN2023/130325** |

### C.    DOCUMENTS CONSIDERED TO BE RELEVANT

| Category* | Citation of document, with indication, where appropriate, of the relevant passages | Relevant to claim No. |
|---|---|---|
| A | CN 113467392 A (ZHONGNAN ELECTRIC POWER TEST & RESEARCH INSTITUTE. CHINA DATANG CORPORATION SCIENCE AND TECHNOLOGY GENERAL RESEARCH INSTITUTE LTD.) 01 October 2021 (2021-10-01)<br>entire document | 1-10 |
| A | CN 114457202 A (XINJIANG BAYI IRON & STEEL CO., LTD.) 10 May 2022 (2022-05-10)<br>entire document | 1-10 |
| A | CN 115612767 A (CISDI ENGINEERING CO., LTD.) 17 January 2023 (2023-01-17)<br>entire document | 1-10 |
| A | JP 2015175592 A (NIPPON STEEL & SUMITOMO METAL CORP.) 05 October 2015 (2015-10-05)<br>entire document | 1-10 |
| A | JP H05239512 A (SUMITOMO METAL INDUSTRIES, LTD.) 17 September 1993 (1993-09-17)<br>entire document | 1-10 |

Form PCT/ISA/210 (second sheet) (July 2022)

## INTERNATIONAL SEARCH REPORT
### Information on patent family members

International application No.

**PCT/CN2023/130325**

| Patent document cited in search report | | | Publication date (day/month/year) | Patent family member(s) | Publication date (day/month/year) |
|---|---|---|---|---|---|
| CN | 116203901 | A | 02 June 2023 | None | |
| CN | 114277205 | A | 05 April 2022 | None | |
| CN | 101408314 | A | 15 April 2009 | None | |
| CN | 102888479 | A | 23 January 2013 | None | |
| CN | 110968063 | A | 07 April 2020 | None | |
| CN | 111041140 | A | 21 April 2020 | None | |
| CN | 113467392 | A | 01 October 2021 | None | |
| CN | 114457202 | A | 10 May 2022 | None | |
| CN | 115612767 | A | 17 January 2023 | None | |
| JP | 2015175592 | A | 05 October 2015 | None | |
| JP | H05239512 | A | 17 September 1993 | None | |

Form PCT/ISA/210 (patent family annex) (July 2022)